# EUROPÄISCHE PATENTSCHRIFT

(11) **EP 3 874 174 B1**
(45) Veröffentlichungstag und Bekanntmachung des Hinweises auf die Patenterteilung: **05.04.2023**
(21) Anmeldenummer: 19790441.0
(22) Anmeldetag: 07.10.2019
(51) Int. Cl.: F16D 13/69, F16D 25/0638

(54) **REIBUNGSKUPPLUNG**
FRICTION CLUTCH
EMBRAYAGE À FRICTION

(30) Priorität: 29.10.2018 DE 102018126906
(43) Veröffentlichungstag der Anmeldung: 08.09.2021
(73) Patentinhaber: Schaeffler Technologies AG & Co. KG, 91074 Herzogenaurach (DE)
(72) Erfinder: REIMNITZ, Dirk, 77815 Bühl (DE)
(86) Internationale Anmeldenummer: PCT/DE2019/100867
(87) Internationale Veröffentlichungsnummer: WO 2020/088710

(56) Entgegenhaltungen:
- EP-A1- 3 061 983
- US-A- 4 396 101

## Beschreibung

Die Erfindung betrifft eine Reibungskupplung, bevorzugt für eine zwischen einem Kraftfahrzeugmotor und einem Kraftfahrzeuggetriebe geschaltete Reibungskupplung eines Kraftfahrzeugs. Die Reibungskupplung ist insbesondere eine Lamellenkupplung oder eine Mehrscheibenkupplung.

Lamellenkupplungen oder Lamellenbremsen übertragen Drehmoment indem Lamellen, die mit dem Antrieb verbunden sind, und Lamellen, die mit dem Abtrieb verbunden sind, zusammengepresst werden. An jeder Kontaktstelle zwischen einer mit dem Antrieb verbundenen Lamelle und einer mit dem Abrieb verbundenen Lamelle bildet sich dabei ein Reibkontakt aus, über den Drehmoment zwischen den Lamellen übertragbar ist. In den meisten Lamellenkupplungen oder Lamellenbremsen sind jeweils die mit dem Antrieb verbundenen Lamellen und die mit dem Abrieb verbundenen Lamellen immer abwechselnd angeordnet, um möglichst viele Kontaktstellen zu bilden. Zusammengedrückt wird das aus den Lamellen gebildete Lamellenpaket von einer entlang der Drehachse der Reibungskupplung verlagerbaren Anpressplatte, die das Lamellenpaket gegen eine axial feststehende Gegenplatte drückt. Die von der Anpressplatte ausgeübte Anpresskraft überträgt die Anpressplatte direkt auf die an sie angrenzende Lamelle, die sich wiederum an der direkt an sie angrenzende Nachbarlamelle abstützt. Indem jede Lamelle jeweils gegen die benachbarte Lamelle gedrückt wird, werden alle Kontaktstellen zusammengedrückt. Die letzte Lamelle stützt sich an der Gegenplatte ab.

Um die Drehmomentübertragung zu verringern oder ganz zu unterbrechen, wird die Anpresskraft der Anpressplatte reduziert oder die Anpressplatte von dem Lamellenpaket abgehoben. Sobald die Anpressplatte sich von den Lamellen wegbewegt (die Anpressplatte lüftet), rutschen die Lamellen etwas nach, so dass alle Kontakte zwischen den Lamellen kraftfrei werden und im Idealfall sogar etwas Abstand zwischen den Lamellen besteht (die Lamellen lüften). Damit die Lamellen Drehmoment auf den Antrieb oder Abtrieb übertragen können und sich aber auch axial bewegen können, sind die Lamellen drehfest aber axial verlagerbar mit dem Antrieb oder Abtrieb verbunden.

Dazu sind die Lamellen meist mit einem Außenlamellenträger oder einen Innenlamellenträger mit einer spielbehafteten zumindest aber axialbeweglichen Formschlusskontur verbunden. Diese Formschlusskontur ist meist als Steckverzahnung ausgeführt.

Während die Kupplung geöffnet oder geschlossen wird, rutschen die Lamellen in den Verzahnungskonturen hin und her, um zu lüften oder um an die Nachbarlamellen oder die Gegenplatte angepresst zu werden. Um die Lamellen verschieben zu können, muss die Reibung in der Verzahnung überwunden werden. Solange die Lamellen noch kein Drehmoment übertragen, sind die Reibkräfte gering, die einer axialen Verlagerung der Lamelle entgegenwirken. Beginnt die Lamelle jedoch schon Drehmoment zu übertragen bevor ihre notwendige axiale Verlagerung abgeschlossen ist, oder überträgt die Lamelle noch Drehmoment und wird trotzdem schon axial verlagert, sind die Reibkräfte, die der axialen Verlagerung entgegenwirken, deutlich höher. In der Verzahnung entsteht eine dem Drehmoment proportionale tangentiale Kraft, die die Zahnflanken der Lamelle und des Lamellenträgers zusammendrückt und die Reibkraft erhöht.

Die Reibkräfte in der Verzahnung sind bei Lamellenkupplungen und Lamellenbremsen sehr störend, da sie die Regelbarkeit der Kupplung verschlechtern (es entsteht Hysterese) und das maximale übertragbare Moment reduzieren. Die Reibung hat deshalb so starken negativen Einfluss auf das Verhalten der Kupplung, da die Reibung je nach Bewegungsrichtung die Anpresskraft, mit der zwei benachbarte Reibflächen zusammengedrückt werden, reduziert (Schließvorgang) oder erhöht (Öffnungsvorgang). Zudem sind die herrschenden Reibwerte nicht konstant und bei einem Zug-Schub-Wechsel kann die Reibung sogar ganz verschwinden. Die momentan herrschenden Reibverhältnisse sind daher nicht gleich und häufig auch nicht genau vorhersagbar, so dass die Steuerung der Kupplung durch die unerwünschte Reibung ungenau wird.

Eine Mehrscheiben-Kupplungsanordnung mit mit der Anspressplatte gekoppelten Zwischenplatten ist aus der EP 3 061 983 A1 bekannt. Hierbei sind die Zwischenplatten starr mit einem Betätigungsmechanismus verbunden, so dass keine gesteuerte Abhebung der Zwischenplatten von den Reibpartnern möglich ist.

Eine weitere relevante Offenbarung ist aus der US 4,396,101 A bekannt.

Hiervon ausgehend liegt der vorliegenden Erfindung die Aufgabe zugrunde, die eingangs geschilderten Probleme zumindest teilweise zu lindern. Insbesondere soll ein möglichst gesteuerter Schließ- bzw. Öffnungsvorgang der Reibungskupplung ermöglicht werden.

Diese Aufgabe wird gelöst mit einer Reibungskupplung gemäß den Merkmalen des unabhängigen Anspruchs 1. Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Es wird eine Reibungskupplung vorgeschlagen, zumindest aufweisend eine Gegenplatte, eine gegenüber der Gegenplatte entlang einer gemeinsamen Drehachse verlagerbare Anpressplatte sowie eine Mehrzahl von zwischen der Gegenplatte und der Anpressplatte angeordnete Kupplungsscheiben. Die Reibungskupplung ist eine Mehrscheibenkupplung mit zusätzlich mindestens einer, zwischen der Gegenplatte und der Anpressplatte angeordneten Zwischenplatte oder eine Lamellenkupplung mit zusätzlich mindestens einer, zwischen der Gegenplatte und der Anpressplatte angeordneten Lamelle.

Dabei
i. ist (bei einer Mehrscheibenkupplung) zwischen der Anpressplatte und der Zwischenplatte sowie zwischen der Gegenplatte und der Zwischenplatte jeweils eine Kupplungsscheibe angeordnet; oder
ii. sind (bei einer Lamellenkupplung) zwischen der Anpressplatte und der Gegenplatte angeordnete Kupplungsscheiben durch jeweils eine Lamelle voneinander beabstandet angeordnet.

Die Reibungskupplung ist derart ausgeführt, dass zumindest bei einem Öffnen der Reibungskupplung und dabei ausgehend von der Anpressplatte und hin zur Gegenplatte jede der Kupplungsscheiben jeweils nacheinander von der jeweilig benachbart angeordneten Komponente (Anpressplatte, Gegenplatte, Zwischenplatte, Lamelle) wegbewegbar ist oder zumindest bei einem Schließen der Reibungskupplung und dabei ausgehend von der Gegenplatte und hin zur Anpressplatte jede der Kupplungsscheiben jeweils nacheinander zu der jeweilig benachbart angeordneten Komponente (Anpressplatte, Gegenplatte, Zwischenplatte, Lamelle) hinbewegbar ist.

Bei Schließen bekannter Reibungskupplungen erzeugt die Anpressplatte zuerst die Reibkontakte mit Kupplungsscheiben in ihrer unmittelbaren Nähe, wenn sie sich in der axialen Richtung hin zur Gegenplatte bewegt. Um auch die Reibkontakte der Kupplungsscheiben in der Nähe der Gegenplatte zu schließen, müssen die Anpressplatte und die sich in ihrer Nähe befindenden und bereits Drehmoment übertragenden Kupplungsscheiben und Zwischenplatten bzw. Lamellen axial verlagert werden. Dabei müssen die ungewollten durch das übertragene Drehmoment verursachten Reibkräfte zwischen den Kupplungsscheiben und z. B. einem Lamellenträger oder einer Welle der Reibungskupplung überwunden werden.

Insbesondere ist bei einer Mehrscheibenkupplung mindestens eine Zwischenplatte z. B. mit Blattfedern an der restlichen Reibungskupplung (z. B. an der Gegenplatte oder an einem gemeinsamen Gehäuse) angebunden, wobei nur die Kupplungsscheiben bei bekannten Betätigungen der Reibungskupplung axial reibend verschoben werden müssen. Bei einer Lamellenkupplung werden bei einer bekannten Betätigung der Lamellenkupplung insbesondere Lamellen, also z. B. Innenlamellen und Außenlamellen reibend axial verschoben. Die hier für die Reibungskupplung vorgeschlagene Bewegungsreihenfolge hat Vorteile für beide Kupplungskonzepte, unabhängig von der Anzahl ungewollter, axial verschiebbarer Reibkontakte.

Die Reibungskupplung umfasst bei einer Lamellenkupplung also mindestens eine Gegenplatte, eine Anpressplatte, eine Lamelle sowie zwei Kupplungsscheiben, wobei eine Kupplungsscheibe zwischen Gegenplatte und Lamelle und die andere Kupplungsscheibe zwischen Lamelle und Anpressplatte angeordnet ist. Ggf. sind weitere Lamellen und weitere Kupplungsscheiben vorgesehen. Die Kupplungsscheiben sind insbesondere als Innenlamellen und die Lamellen dann als Außenlamellen ausgeführt (oder umgekehrt). Die Außenlamellen greifen gegenüber der Umfangsrichtung formschlüssig in einen Außenlamellenträger ein und sind gegenüber diesem entlang der axialen Richtung verschiebbar. Die Innenlamellen greifen gegenüber der Umfangsrichtung formschlüssig in einen Innenlamellenträger ein und sind gegenüber diesem entlang der axialen Richtung verschiebbar.

Bei bekannten Reibungskupplungen beginnen also nahe der Anpressplatte angeordnete Kupplungsscheiben schon Drehmoment zu übertragen bevor ihre zum Schließen der Reibungskupplung notwendige axiale Verlagerung abgeschlossen ist, so dass die Reibkräfte, die der axialen Verlagerung entgegenwirken, deutlich höher sind. In der Verzahnung der Lamellenträger entsteht eine dem Drehmoment proportionale tangentiale Kraft, die die Zahnflanken der Lamellenträgers sowie der beteiligten Kupplungsscheiben und Komponenten der Reibungskupplung zusammendrückt und die Reibkraft erhöht.

Bei der hier vorgeschlagenen Bewegungsreihenfolge bewegen sich bei einer Mehrscheibenkupplung zu Beginn des Schließvorgangs die Zwischenplatte (oder die Zwischenplatten) und die Anpressplatte parallel (also miteinander gekoppelt), bis die der Gegenplatte am nächsten gelegene Zwischenplatte auf die direkt neben der Gegenplatte angeordnete Kupplungsscheibe trifft und diese bereits gegen die Gegenplatte drückt. Wird das Reibpaket weiter geschlossen, bleibt die der Gegenplatte am nächsten liegende Kupplungsscheibe axial stehen oder bewegt sich nur noch minimal im Rahmen ihrer axialen Elastizität weiter Richtung Gegenplatte. Wird die Anpressplatte weiter in Richtung der Gegenplatte verlagert, bleibt die der Gegenplatte am nächsten gelegene Zwischenplatte axial stehen oder bewegt sich nur noch etwas im Rahmen der Eigenelastizität der von ihr gegen die Gegenplatte gedrückten Kupplungsscheibe. Falls weitere Zwischenplatten vorhanden sind, bewegen sich diese weiter parallel mit der Anpressplatte, bis auch diese Zwischenplatten, die jeweils in Bewegungsrichtung vor ihnen angeordneten Kupplungsscheiben gegen die jeweils davorliegenden Zwischenplatten gedrückt haben.

Die Anpressplatte bewegt sich weiter in Richtung der Gegenplatte, bis die Anpressplatte die ihr am nächsten liegende Kupplungsscheibe gegen die sich bereits nicht mehr bewegende der Anpressplatte am nächsten liegende Zwischenplatte geschoben hat und diese beginnt einzuklemmen.

Bei der hier vorgeschlagenen Bewegungsreihenfolge bewegen sich bei einer Lamellenkupplung zu Beginn des Schließvorgangs die mindestens eine Lamelle (erste Lamelle) und die Anpressplatte parallel (also miteinander gekoppelt), bis die der Gegenplatte nächstliegende Lamelle (die erste Lamelle) die direkt neben der Gegenplatte angeordnete Kupplungsscheibe trifft und diese bereits gegen die Gegenplatte drückt. Wird das Reibpaket weiter geschlossen, bleibt die der Gegenplatte am nächsten liegende Kupplungsscheibe axial stehen oder bewegt sich nur noch minimal im Rahmen ihrer axialen Elastizität weiter Richtung Gegenplatte. Wird die Anpressplatte weiter in Richtung der Gegenplatte verlagert, bleibt die erste Lamelle axial stehen oder bewegt sich nur noch etwas im Rahmen der Eigenelastizität der von ihr gegen die Gegenplatte gedrückten Kupplungsscheibe. Die Anpressplatte wird weiter verlagert und drücktdie direkt neben ihr angeordnete Kupplungsscheibe gegen eine sich nicht mehr oder nun noch minimal bewegende (erste) Lamelle.

Bei einer Lamellenkupplung mit mehreren Lamellen (und mehr als zwei Kupplungsscheiben) bewegen sich die insbesondere weiteren vorhandenen mit der Anpressplatte gekoppelten Lamellen nach der im Wesentlichen abgeschlossenen Verlagerung der ersten Lamelle weiter parallel mit der Anpressplatte in Richtung der Gegenplatte bis die nächste Lamelle (die zweite Lamelle) die nächste Kupplungsscheibe gegen die sich bereits nicht mehr bewegende Lamelle (die erste Lamelle) geschoben hat und diese beginnt einzuklemmen. Dieser Vorgang wiederholt sich solange bis die Anpressplatte die direkt neben ihr angeordnete Kupplungsscheibe gegen eine sich nicht mehr oder nun noch minimal bewegende Lamelle drückt.

Da die Kupplungsscheiben bzw. Lamellen erst dann beginnen, ein nennenswertes Drehmoment zu übertragen, wenn sie auf beiden Seiten an ihren Nachbarbauteilen anliegen und eingeklemmt werden, erfolgt bei dieser Bewegungsreihenfolge die axiale Verlagerung der Kupplungsscheiben und Lamellen bzw. der Zwischenplatte und auch der Anpressplatte bevor die jeweilige Kupplungsscheibe bzw. Lamelle ein nennenswertes Drehmoment überträgt. Solange die Kupplungsscheibe bzw. Lamelle kein nennenswertes Drehmoment überträgt, sind auch die Kräfte, die zwischen den Kupplungsscheiben und Lamellen und den Lamellenträgern übertragen werden, gering. Damit entsteht selbst bei hohen Reibwerten zwischen den Kupplungsscheiben und Lamellen und den Lamellenträgern, die bei einer anderen Bewegungsreihenfolge zu einem großen Problem würden, keine nennenswerte Verschiebereibung zwischen den Kupplungsscheiben bzw. Außenlamellen und den Lamellenträgern.

Insbesondere ist infolge des Verlagerns der Anpressplatte jeweils ein Reibkontakt zwischen der jeweiligen Kupplungsscheibe und der benachbart zu dieser Kupplungsscheibe angeordneten Komponente (Anpressplatte, Gegenplatte, Zwischenplatte, Lamelle) beim Schließen der Reibungskupplung herstellbar und beim Öffnen der Reibungskupplung lösbar, wobei diese Reibkontakte in einer festgelegten zeitlichen Reihenfolge nacheinander erzeugbar oder lösbar sind.

Es wird hier also ein gesteuertes Herstellen bzw. Lösen von Reibkontakten zwischen den Reibpartnern (also Gegenplatte, Anpressplatte, Zwischenplatte, Lamelle, Kupplungsscheibe) vorgeschlagen. Dabei werden die Reibkontakte sukzessive hergestellt bzw. gelöst, wobei die Reibkontakte zwischen den entlang der axialen Richtung hintereinander angeordneten Komponenten der Reibungskupplung in einer festgelegten Reihenfolge hergestellt und/oder gelöst werden. Insbesondere werden die Reibkontakte zwischen Komponenten sukzessive (d. h. insbesondere zeitlich aufeinander folgend) gebildet oder wieder gelöst, wobei diese Reihenfolge für das Herstellen und/oder das Lösen der Reibkontakte nur entlang einer Richtung entlang der axialen Richtung fortschreitet.

Zur Sicherstellung dieser gesteuerten Reihenfolge zur Bildung und/oder zum Lösen der Reibkontakte weist die Reibungskupplung Mittel auf, über die bestimmte Komponenten der Reibungskupplung relativ zueinander verlagerbar sind. Erfindungsgemäß umfassen die Mittel Federelemente.

Erfindungsgemäß ist
a) (bei einer Mehrscheibenkupplung) die Anpressplatte mit der Zwischenplatte über mindestens ein erstes Federelement und die Zwischenplatte mit der Gegenplatte über mindestens ein zweites Federelement verbunden; wobei durch eine Federkraft des jeweiligen Federelements bei geöffneter Reibungskupplung die Anpressplatte von der Zwischenplatte und die Zwischenplatte von der Gegenplatte beabstandet angeordnet ist; oder
b) (bei einer Lamellenkupplung) die Anpressplatte mit der mindestens einen (bzw. mit einer nächstgelegenen) Lamelle über mindestens ein erstes Federelement verbunden; wobei durch die Federkraft des ersten Federelements die mindestens eine Lamelle bei geöffneter Reibungskupplung von der Anpressplatte beabstandet angeordnet ist

Insbesondere ist bei einer Lamellenkupplung mit mehr als einer Lamelle (und dann mehr als zwei Kupplungsscheiben) die Anpressplatte mit einer weiter beabstandeten Lamelle über mindestens ein zweites Federelement verbunden; wobei durch die Federkraft des jeweiligen Federelements die jeweilige Lamelle bei geöffneter Reibungs-kupplung von der Anpressplatte und von der jeweils nächstgelegenen Lamelle beabstandet angeordnet ist.

Insbesondere sind die Federkräfte der Federelemente voneinander unterschiedlich ausgeführt.

Insbesondere ist die Federkraft des ersten Federelements größer als die Federkraft des zweiten Federelements.

Insbesondere ist zumindest ein Anschlagelement vorgesehen, durch das ein maximaler Abstand (bei einer Mehrscheibenkupplung) zumindest zwischen Anpressplatte und Zwischen platte oder zwischen Zwischenplatte und Gegenplatte oder (bei einer Lamellenkupplung) zwischen Anpressplatte und der mit der Anpressplatte über das Federelement verbundenen mindestens einen Lamelle definiert ist. Durch das Anschlagelement kann eine durch das Federelement bedingte Verlagerung von Komponenten der Reibungskupplung begrenzt werden. Dadurch kann z. B. bei einer geöffneten Reibungskupplung sichergestellt werden, dass die einzelnen Komponenten in festgelegten Abständen zueinander angeordnet sind.

Insbesondere ist zumindest ein Anschlagelement (bevorzugt alle Anschlagelemente, jeweils) einteilig mit dem mindestens einen Federelement ausgeführt.

Insbesondere sind mehrere mit unterschiedlichen Platten (Gegenplatte, Anpressplatte, Zwischenplatte) oder Lamellen verbundene Federelemente über eine gemeinsame Befestigung mit der Anpressplatte verbunden. Insbesondere kann die Befestigung über ein Niet erfolgen, alternativ über eine Schraube oder eine stoffschlüssige Verbindung.

Insbesondere ist zumindest ein Federelement bei geöffneter Reibungskupplung kraftfrei. Kraftfrei heißt insbesondere, dass das mindestens eine Federelement (gegenüber der vorgesehenen Wirkrichtung, hier in der Regel die axiale Richtung) dann vollständig entspannt ist. Insbesondere gilt das für einen Teil der Federelemente, bevorzugt für alle Federelemente.

Insbesondere ist die Reibungskupplung eine Lamellenkupplung oder eine Mehrscheibenkupplung, wobei (bei einer Lamellenkupplung) zumindest die mindestens eine Lamelle oder zumindest eine der Mehrzahl von Lamellen oder (bei einer Mehrscheibenkupplung) zumindest die Zwischenplatte oder die Anpressplatte eine axiale Weichheit aufweist, die entlang einer radialen Richtung zwischen einem Ringkörper, der einen Reibkontakt mit einer benachbarten Komponente (Anpressplatte, Gegenplatte, Zwischenplatte, Kupplungsscheibe) ausbildet, und einem Konturelement, das mit einem Außenlamellenträger oder einem Innenlamellenträger drehmomentübertragend verbunden ist, angeordnet ist. Die axiale Weichheit, z. B. eine Verjüngung des Materials der Lamelle oder mindestens ein zusätzliches elastisches Element (z.B. eine Feder), ermöglicht eine (begrenzte, dabei aber) elastische Verlagerung des Ringkörpers gegenüber dem Konturelement. Damit ist nach Bildung eines Reibkontakts keine weitere Verlagerung des Konturelements entlang der axialen Richtung gegenüber einem damit (gegenüber der Umfangsrichtung) formschlüssig verbundenen Lamellenträger mehr notwendig, so dass Reibkräfte weiter minimiert werden können. Insbesondere ist die Reibungskupplung eine Lamellenkupplung oder eine Mehrscheibenkupplung, wobei der mindestens eine Kupplungsscheiben eine axiale Weichheit aufweist, die vorzugsweise entlang einer radialen Richtung zwischen einem Ringkörper, der einen Reibkontakt mit einer benachbarten Komponente (Anpressplatte, Gegenplatte, Zwischenplatte) ausbildet, und einem Konturelement, das mit einem Außenlamellenträger, einem Innenlamellenträger oder einer Welle drehmomentübertragend verbunden ist, angeordnet ist. Die axiale Weichheit, z. B. eine Verjüngung des Materials der als Lamelle ausgeführten Kupplungsscheibe, einem Teil der Belagsfederungselemente oder mindestens ein zusätzliches elastisches Element (z.B. eine Feder), ermöglicht eine (begrenzte, dabei aber) elastische Verlagerung des Ringkörpers gegenüber dem Konturelement. Damit ist nach Bildung eines Reibkontakts keine weitere Verlagerung des Konturelements entlang der axialen Richtung gegenüber einem damit (gegenüber der Umfangsrichtung) formschlüssig verbundenen Lamellenträger mehr notwendig, so dass Reibkräfte weiter minimiert werden können.

Insbesondere wird weiter eine Reibungskupplung vorgeschlagen, zumindest aufweisend eine entlang einer gemeinsamen Drehachse verlagerbare Anpressplatte, eine Gegenplatte sowie mindestens eine dazwischen angeordnete Kupplungsscheibe, wobei die Reibungskupplung eine Mehrscheibenkupplung mit zusätzlich mindestens einer Zwischenplatte oder eine Lamellenkupplung mit zusätzlich einer Mehrzahl von Außenlamellen und Innenlamellen ist; wobei
a. (bei einer Mehrscheibenkupplung) die Anpressplatte mit der Zwischenplatte über mindestens ein erstes Federelement und die Zwischenplatte mit der Gegenplatte über mindestens ein zweites Federelement verbunden ist, wobei eine die Platten auseinanderdrückende Federkraft des mindestens einen ersten Federelementes größer oder kleiner ist als die Federkraft des mindestens einen zweiten Federelementes; oder
b. (bei einer Lamellenkupplung) die Anpressplatte mit jeder der Außenlamellen oder mit jeder der Innenlamellen über jeweils ein Federelement verbunden ist, durch dessen Federkraft die jeweilige Lamelle bei geöffneter Reibungskupplung von der Anpressplatte und von der benachbart angeordneten Lamelle beabstandet angeordnet ist.

Insbesondere wird der Reibungskupplung die hier vorgeschlagene Bewegungsreihenfolge durch die von Federelementen hervorgerufene Kraftwirkung aufgezwungen. Statt durch Federelemente kann die Kraftwirkung, die die Lamellen Zwischenplatten und Kupplungsscheiben in der gewünschten Reihenfolge bewegt, insbesondere alternativ oder zusätzlich oder auch nur teilweise durch Magnete oder Fliehkraftgewichte hervorgerufen werden.

Vorsorglich sei angemerkt, dass die hier verwendeten Zahlwörter ( erste , zweite , ) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ( mindestens ein ), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: den Verlauf eines Schließvorgangs einer Lamellenkupplung;
- Fig. 2:: den Verlauf eines Öffnungsvorgangs einer Lamellenkupplung;
- Fig. 3:: einen anderen Verlauf eines Schließvorgangs der bekannten Lamellenkupplung;
- Fig. 4:: eine Tripelkupplungsvorrichtung in einem ersten Zustand in einer Seitenansicht im Schnitt;
- Fig. 5:: die Tripelkupplungsvorrichtung nach Fig. 4 in einem zweiten Zustand in einer Seitenansicht im Schnitt;
- Fig. 6:: die Tripelkupplungsvorrichtung nach Fig. 4 und 5 in einem dritten Zustand in einer Seitenansicht im Schnitt;
- Fig. 7:: eine Lamellenkupplung in einer perspektivischen Ansicht;
- Fig. 8:: die Lamellenkupplung nach Fig. 7 in einer anderen perspektivischen Ansicht;
- Fig. 9:: eine andere Lamellenkupplung in geöffnetem Zustand in einer perspektivischen Ansicht;
- Fig. 10:: die andere Lamellenkupplung nach Fig. 9 in geschlossenem Zustand in einer anderen perspektivischen Ansicht; und
- Fig. 11:: ein Detail einer Lamellenkupplung in einer Seitenansicht im Schnitt.

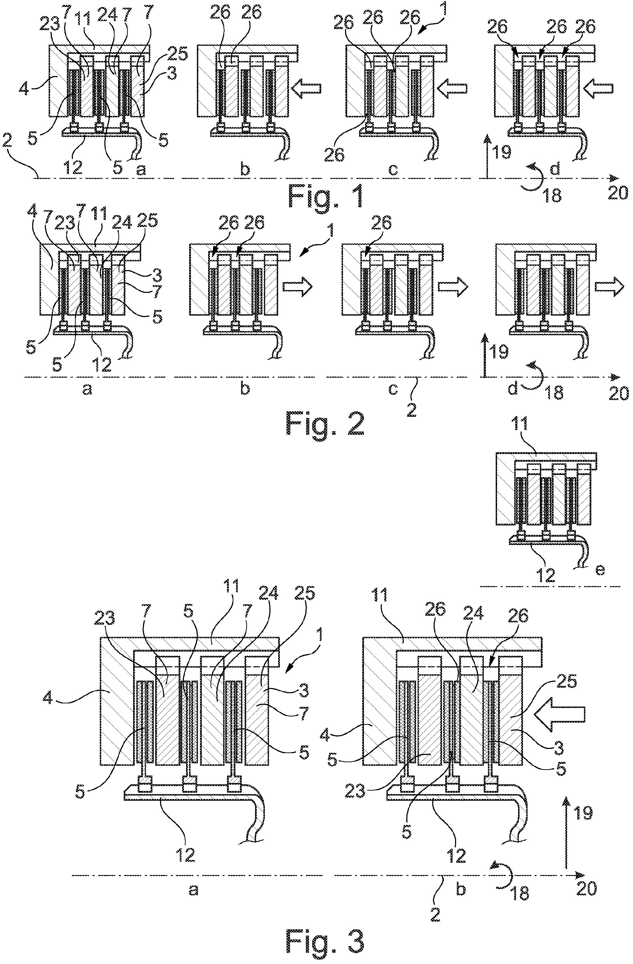

Fig. 1 zeigt den Verlauf eines Schließvorgangs einer Reibungskupplung 1. Die Lamellenkupplung weist einen als Gegenplatte 4 vorgesehenen Außenlamellenträger 11, damit verbundene Außenlamellen 7 und einen Innenlamellenträger 12 mit damit verbundenen Kupplungsscheiben 5 auf. Der Schließvorgang erfolgt sukzessive, ausgehend von der linken Darstellung bis hin zur rechten Darstellung.

Fig. 2 zeigt den Verlauf eines Öffnungsvorgangs einer Lamellenkupplung. Auf die Ausführungen zu Fig. 1 wird verwiesen. Der Öffnungsvorgang erfolgt sukzessive, ausgehend von der linken Darstellung bis hin zur rechten Darstellung (unten rechts).

Die Reihenfolge der in einer Lamellenkupplung oder Lamellenbremse notwendigen Bewegungen der einzelnen Komponenten entlang der axialen Richtung 20 wird im Folgenden mit Bezug zu Fig. 1 und 2 beschrieben. Die Lamellenkupplung nach Fig. 1 und 2 zeigt drei Kupplungsscheiben 5 (Innenlamellen), die axial beweglich aber drehfest mit einem Innenlamellenträger 12 verbunden sind. Der Außenlamellenträger 11 und die axial feststehende Gegenplatte 4 sind (vereinfacht) als ein Bauteil dargestellt. In dem Außenlamellenträger 11 sind die beiden Außenlamellen 7 (erste Lamelle 23, zweite Lamelle 24) und die Anpressplatte (dritte Lamelle 25; Bauteil ganz rechts) drehfest aber axial beweglich eingehängt.

Die Fig. 1 zeigt die Bewegungsreihenfolge (von der linken Figur 1a bis hin zur rechten Figur 1d) beim Schließen des Reibpakets. Die linke Fig. 1a der Fig. 1 zeigt das Reibpaket wie es sich bei einer geöffneten Kupplung oder geöffneten Bremse einstellen soll. Die Anpressplatte 3 hat sich von dem Rest des Reibpaketes entfernt und die Kupplungsscheiben 5 und die Außenlamellen 7, 23, 24 haben sich durch ihre axiale Beweglichkeit (z.B. Gleitbewegung zwischen Kupplungsscheiben 5 und Innenlamellenträger 12 bzw. zwischen Außen-Lamellen 7, 23, 24 und Außenlamellenträger 11) so ausgerichtet, dass alle potenziellen Reibstellen zwischen den Lamellen 5, 7, 23, 24 und zwischen den Lamellen 5, 7, 23, 24 und der Anpressplatte 3 oder der Gegenplatte 4 Spiel aufweisen und es zu keiner (bzw. keiner nennenswerten Berührung) kommt.

Bei den unterschiedlichen Figuren 1a bis 1d wird nun die Anpressplatte 3 in Richtung der Gegenplatte 4 verschoben, um das Reibpaket zu schließen (die Bewegung entlang der axialen Richtung 20 ist durch den Pfeil angedeutet). Bei der hier vorgeschlagenen Bewegungsreihenfolge bewegen sich zu Beginn des Schließvorgangs die Außenlamellen 7, 23, 24 und die Anpressplatte 3 parallel, bis die der Gegenplatte 4 am nächsten gelegene Außenlamelle 7 (die erste Lamelle 23) auf die direkt neben der Gegenplatte 4 angeordnete Kupplungsscheibe 5 trifft und diese bereits gegen die Gegenplatte 4 drückt (Fig. 1b). Wird das Reibpaket weiter geschlossen, bleibt die der Gegenplatte 4 am nächsten liegende Außenlamelle 7 (die erste Lamelle 23) axial stehen oder bewegt sich nur noch minimal im Rahmen der axialen Elastizität der von ihr eingeklemmten Kupplungsscheibe 5 weiter Richtung Gegenplatte 4. Die anderen Außenlamellen 7 (in der Abbildung ist nur noch eine weitere Außenlamelle 7, nämlich die zweite Lamelle 24) abgebildet) bewegen sich weiter parallel mit der Anpressplatte 3 in Richtung der Gegenplatte 4 bis die nächste Außenlamelle 7 (hier die zweite Lamelle 24) die nächste Kupplungsscheibe 5 gegen die sich bereits nicht mehr bewegende Außenlamelle 7 (hier die erste Lamelle 23) geschoben hat und diese beginnt einzuklemmen (Fig. 1c). Dieser Vorgang wiederholt sich solange bis die Anpressplatte 3 die direkt neben ihr angeordnete Kupplungsscheibe 5 gegen eine sich nicht mehr oder nun noch minimal bewegende Außenlamelle 7 (hier die zweite Lamelle 24) drückt (Fig. 1d). Da die Kupplungsscheiben 5 bzw. Außenlamellen 7, 23, 24 erst dann beginnen, ein nennenswertes Drehmoment zu übertragen, wenn sie auf beiden Seiten an ihren Nachbarbauteilen anliegen und eingeklemmt werden, erfolgt bei dieser Bewegungsreihenfolge die axiale Verlagerung der Kupplungsscheiben 5 und Außenlamellen 7, 23, 24 und auch der Anpressplatte 3 bevor die jeweilige Kupplungsscheibe 5 bzw. Außenlamelle 7, 23, 24 ein nennenswertes Drehmoment überträgt. Solange die Kupplungsscheibe 5 bzw. Außenlamelle 7, 23, 24 kein nennenswertes Drehmoment überträgt, sind auch die Kräfte, die zwischen den Kupplungsscheiben 5 und Außenlamellen 7, 23, 24 und den Lamellenträgern 11, 12 übertragen werden, gering. Damit entsteht selbst bei hohen Reibwerten zwischen den Kupplungsscheiben 5 und Außenlamellen 7, 23, 24 und den Lamellenträgern 11, 12, die bei einer anderen Bewegungsreihenfolge zu einem großen Problem würden, keine nennenswerte Verschiebereibung zwischen den Kupplungsscheiben 5 bzw. Außenlamellen 7, 23, 24 und den Lamellenträgern 11, 12.

Die Fig. 2 zeigt die Bewegungsreihenfolge (von der linken Figur 2a bis hin zur rechten Figur 2e) beim Öffnen des Reibpakets. Fig. 2a ist identisch mit der Fig. 1d und zeigt das komplett geschlossene Reibpaket. Bei den Fig. 2b bis 2e wird nun die Anpressplatte 3 (die dritte Lamelle 25) von der Gegenplatte 4 wegbewegt, um das Reibpaket zu öffnen (die Bewegung entlang der axialen Richtung 20 ist durch den Pfeil angedeutet). Bei der hier vorgeschlagenen Bewegungsreihenfolge bewegt sich zu Beginn des Öffnungsvorgangs nur die Anpressplatte 3, die somit sehr schnell die hinter der Anpressplatte 3 gelegene Kupplungsscheibe 5 entlastet. Dadurch wird sehr schnell der Reibkontakt 26 zwischen der Anpressplatte 3 und der sie benachbarten Kupplungsscheibe 5 aufgehoben. Die Anpressplatte 3 überträgt so kein Drehmoment mehr und kann somit während des weiteren Öffnungsvorganges des Reibpaketes sehr reibungsarm entlang der axialen Richtung 20 von der Gegenplatte 4 wegbewegt werden (Fig. 2b). Beim weiteren Öffnungsvorgang wird die Anpressplatte 3 weiter von der Gegenplatte 4 wegbewegt und auch die Außenlamelle 7, die am nächsten bei der Anpressplatte 3 angeordnet ist (hier die zweite Lamelle 24), fängt an, sich parallel mit der Anpressplatte 3 von der Gegenplatte 4 wegzubewegen. Dadurch entlastet auch diese Außenlamelle 7 (also die zweite Lamelle 24) die neben ihr angeordnete Kupplungsscheibe 5 und hebt den Reibkontakt 26 zu ihr auf (Fig. 2c). Indem sich dieser Vorgang fortsetzt, verlieren alle Außenlamellen 7, 23, 24 und Kupplungsscheiben 5 sukzessive ihren beidseitigen Kontakt zu den Nachbarbauteilen, durch den sie eingeklemmt werden und übertragen so kein nennenswertes Drehmoment mehr, wodurch sie nachfolgend leicht axial verlagert werden können. Wenn auch die letzte Außenlamelle 7 (hier die erste Lamelle 23) die neben der Gegenplatte 4 angeordnete Kupplungsscheibe 5 entlastet und von ihr abhebt, ist das Reibpaket geöffnet (Fig. 2d). Während dem Öffnungsvorgang werden die Kupplungsscheiben 5 von den Außenlamellen 7, 23, 24 axial verschoben, wodurch sich die Kupplungsscheiben 5 einseitig an den Außenlamellen 7, 23, 24 anlegen (Fig. 2c und 2d). Dieser einseitige Kontakt verursacht aber keine hohen Kräfte und überträgt auch kein hohes Drehmoment. Nach einigen Umdrehungen des schlupfenden Reibpakets (Differenzdrehzahl zwischen Kupplungsscheiben 5 und Außenlamellen 7, 23, 24) schütteln sich die Kupplungsscheiben 5 und Außenlamellen 7, 23, 24 aber auch komplett frei, so dass der in Fig. 2e gezeigte Zustand erreicht wird und überhaupt kein oder nur noch ein irrelevanter Kontakt zwischen den Kupplungsscheiben 5 und Außenlamellen 7, 23, 24 besteht.

Fig. 3 zeigt einen anderen, bekannten, Verlauf eines Schließvorgangs Lamellenkupplung. Auf die Ausführungen zu Fig. 1 wird verwiesen.

Hier schiebt die Anpressplatte 3 zuerst die Reibkontakte 26 in ihrer unmittelbaren Nähe zusammen, wenn sie sich in der axialen Richtung 20 hin zur Gegenplatte 4 bewegt (Fig. 3b). Um auch die Reibkontakte 26 der Kupplungsscheibe 5 und der Außenlamellen 7 (hier die erste Lamelle 23) an bzw. in der Nähe der Gegenplatte 4 zu schließen, müssen die Anpressplatte 3 und die sich in ihrer Nähe befindenden und bereits Drehmoment übertragenden Kupplungsscheiben 5 und Außenlamellen 7 (hier die zweite Lamelle 24) axial verlagert werden. Dabei müssen die ungewollten durch das übertragene Drehmoment verursachten Reibkräfte zwischen den Kupplungsscheiben 5 und Außenlamellen 7, 23, 24 sowie den Lamellenträgern 11, 12 bzw. zwischen der Anpressplatte 3 und dem Außenlamellenträger 11 überwunden werden.

Hier beginnen also die beiden rechten Außenlamellen 7 (zweite Lamelle 24, dritte Lamelle 25 bzw. Anpressplatte 3) schon Drehmoment zu übertragen bevor ihre zum Schließen der Reibungskupplung 1 notwendige axiale Verlagerung abgeschlossen ist, so dass die Reibkräfte, die der axialen Verlagerung entgegenwirken, deutlich höher sind. In der Verzahnung entsteht eine dem Drehmoment proportionale tangentiale Kraft, die die Zahnflanken der Lamellen 24, 25 und des Außenlamellenträgers 11 sowie der betreffenden Kupplungsscheiben 5 und des Innenlamellenträgers 12 zusammendrückt und die Reibkraft erhöht.

Dies erhöht die notwendigen Betätigungskräfte und die Hysterese der Reibungskupplung 1, was sich beides sehr ungünstig auf die Regelung der Reibungskupplung 1 auswirkt.

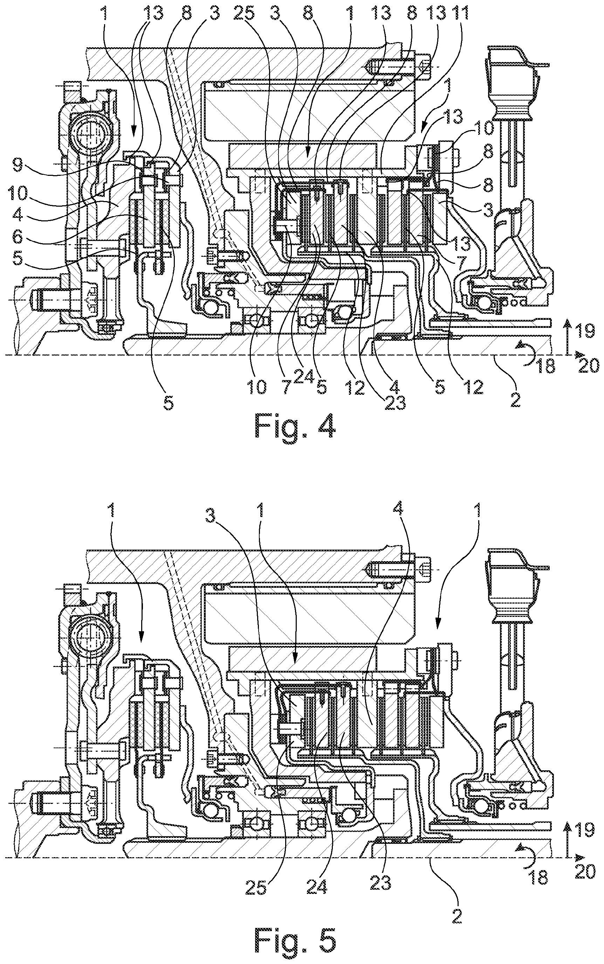

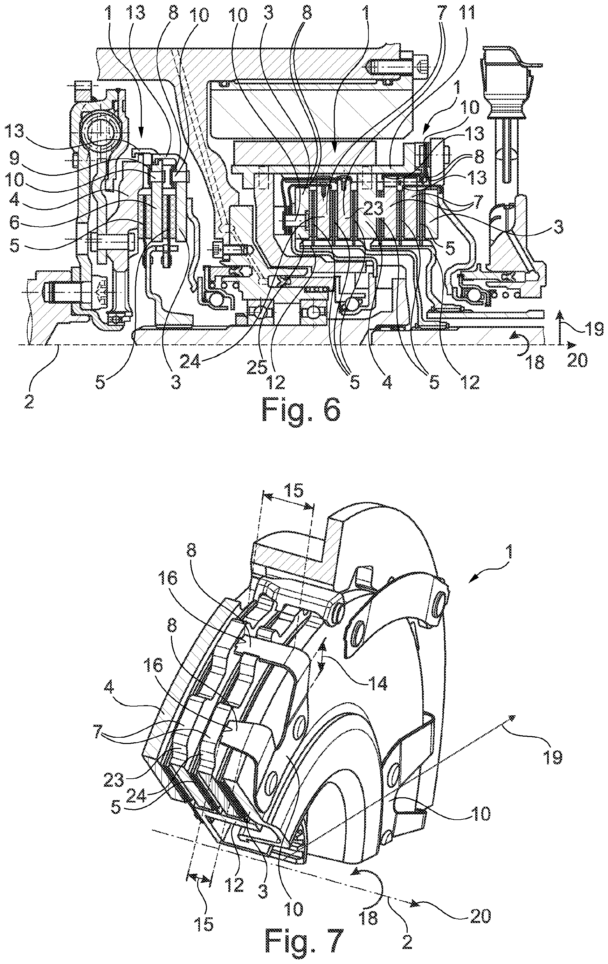

Fig. 4 zeigt eine Tripelkupplungsvorrichtung in einem ersten Zustand (alle Reibungskupplungen 1 geöffnet) in einer Seitenansicht im Schnitt. Fig. 5 zeigt die Tripelkupplungsvorrichtung nach Fig. 4 in einem zweiten Zustand (alle Reibungskupplungen 1) zwischen geöffnetem und geschlossenem Zustand) in einer Seitenansicht im Schnitt. Fig. 6 zeigt die Tripelkupplungsvorrichtung nach Fig. 4 und 5 in einem dritten Zustand (alle Reibungskupplungen 1 in geschlossenem Zustand) in einer Seitenansicht im Schnitt. Die Fig. 4 bis 6 werden im Folgenden gemeinsam beschrieben.

Die Fig. 4, 5 und 6 zeigen ein Hybridmodul mit einer Tripelkupplungsvorrichtung, bestehend aus einer als Mehrscheibenkupplung ausgeführten Trennkupplung (links) und einer als Lamellenkupplung ausgeführten Doppelkupplung (rechts). Die grundsätzliche Funktionsweise eines solchen Hybridmoduls ist bekannt. Erläutert werden im Folgenden nur die Neuerungen, die in den Mehrscheibenkupplungen und Lamellenkupplungen des Hybridmoduls die zuvor beschriebene verbesserte axiale Bewegungsreihenfolge ermöglichen und sicherstellen.

Die Trennkupplung (links) ist als Mehrscheibenkupplung mit zwei Kupplungsscheiben 5 aufgebaut, die zwischen der Anpressplatte 3, der Zwischenplatte 6 und der Gegenplatte 4 einklemmbar sind. Diese drei Platten 3, 4, 6 sind über Federelemente 8, 9 miteinander verbunden (z. B. hier Blattfedern), die die Platten 3, 4, 6 auseinanderdrücken wollen und so das Öffnen der Reibungskupplung 1 unterstützen. Um die verbesserte Bewegungsreihenfolge zu ermöglichen, ist die Kraftwirkung (Federkraft), die die Anpressplatte 3 und die Zwischenplatte 6 auseinander drückt, größer als die Kraftwirkung (Federkraft), die die Zwischenplatte 6 und die Gegenplatte 4 auseinanderdrückt.

In den als Halbschnitt ausgeführten Fig. 4, 5 und 6 ist dies dadurch verdeutlicht, dass zwischen der Anpressplatte 3 und der Zwischenplatte 6 ein Blattfederpaket mit zwei gestapelten Blattfedern (erstes Federelement 8) abgebildet ist und zwischen der Zwischenplatte 6 und der Gegenplatte 4 nur eine Blattfeder (zweites Federelement 9) abgebildet ist. Damit die Reibungskupplung 1 (Fig. 4) trotz der ungleichen Kraftverteilung sicher geöffnet werden kann und die stärkere Federwirkung zwischen der Zwischenplatte 6 und der Anpressplatte 3 die Zwischenplatte 6 nicht ständig gegen die neben der Gegenplatte 4 angeordnete Kupplungsscheibe 5 drückt, ist ein Anschlagelement 13 vorgesehen, das den maximalen Abstand zwischen der Anpressplatte 3 und der Zwischenplatte 6 begrenzt. Dadurch nehmen alle Platten 3, 4, 6 bei geöffneter Reibungskupplung 1 die richtige Position ein, in der alle Reibkontakte 26 der Kupplungsscheiben 5 gelüftet werden können. Optional ist in den Fig. 4, 5, 6 auch ein Anschlagelement 13 zwischen der Zwischenplatte 6 und der Gegenplatte 4 vorgesehen. Dieser kann aber auch entfallen, je nach Ausführungsform des Betätigungssystems.

Durch die unterschiedliche Kraftwirkung zwischen den Platten 3, 4, 6 werden beim Schließen der Reibungskupplung 1 zuerst die Zwischenplatte 6 und die Anpressplatte 3 parallel in Richtung der Gegenplatte 4 bewegt, bis die Kupplungsscheibe 5 neben der Gegenplatte 4 eingeklemmt wird (Fig. 5). Anschließend verringert sich bei zunehmender Betätigungskraft des Betätigungssystems auch der Abstand zwischen der Anpressplatte 3 und der Zwischenplatte 6, so dass auch die zweite Kupplungsscheibe 5 neben der Anpressplatte 3 eingeklemmt wird (Fig. 6). Um die Reibungskupplung 1 wieder zu öffnen, wird die Betätigungskraft, die das Betätigungssystem auf die Reibungskupplung 1 ausübt, reduziert. Durch die unterschiedliche Federwirkung der Federelemente 8, 9 hebt dann zuerst die Anpressplatte 3 von der ihr benachbarten Kupplungsscheibe 5 ab und erst später kann auch die Zwischenplatte 6 von der Kupplungsscheibe 5 neben der Gegenplatte 4 abheben. Durch die unterschiedliche Federwirkung zwischen den Platten 3, 4, 6 und durch das Anschlagelement 13, der den maximalen Abstand zwischen der Anpressplatte 3 und der Zwischenplatte 6 begrenzt, stellt sich so die zuvor beschriebene optimierte Bewegungsreihenfolge ein.

Alternativ können Mehrscheibenkupplungen auch mit mehr als einer Zwischenplatte 6 aufgebaut werden. Damit sich die gewünschte Bewegungsreihenfolge einstellt, müssen die Federelemente 8, 9, die die Zwischenplatten 6 halten und für deren axiale Verlagerbarkeit sorgen, so abgestimmt werden, dass die Kraftwirkung, die jede Zwischenplatten 6 von ihren in der axialen Richtung 20 benachbarten Bauteilen wegdrücken will, von der Gegenplatte 4 zur Anpressplatte 3 hin kontinuierlich zunimmt. Wenn also die Kraftwirkung zwischen Gegenplatte 4 und der ihr am nächsten liegenden Zwischenplatte 6 am kleinsten ist und die Kraftwirkung zwischen Anpressplatte 3 und der ihr am nächsten liegenden Zwischenplatte 6 am größten ist, und wird beim Schließen der Reibungskupplung 1 die Anpressplatte 3 in Richtung der Gegenplatte 4 bewegt, wird die Kupplungsscheibe 5 zwischen der Gegenplatte 4 und der ihr am nächsten liegenden Zwischenplatte 6 zuerst eingeklemmt. Beim weiteren Verschieben der Anpressplatte 3 wird die nächste Kupplungsscheibe 5 zwischen den sie umgebenden Zwischenplatten 6 eingeklemmt, bis sukzessive alle Kupplungsscheiben 5 eingeklemmt worden sind. Als letztes wird die Kupplungsscheibe 5 zwischen der Anpressplatte 3 und der der Anpressplatte 3 am nächsten liegenden Zwischenplatte 6 eingeklemmt. Wenn beim Öffnen der Reibungskupplung 1 die Anpressplatte 3 von der Gegenplatte 4 wegbewegt wird, erfolgt das Lüften der Kupplungsscheiben 5 in umgekehrter Reihenfolge. Die Kupplungsscheibe 5 zwischen der Anpressplatte 3 und der ihr am nächsten liegenden Zwischenplatte 6 wird zuerst gelüftet, bis wieder sukzessive alle Kupplungsscheiben 5 bis hin zu der neben der Gegenplatte 4 angeordneten Kupplungsscheibe 5 gelüftet werden.

Durch Anschlagelemente 13 zwischen den Platten (Gegenplatte 4, Zwischenplatten 6 und Anpressplatte 3) wird sichergestellt, dass alle Platten trotz der unterschiedlichen Kraftwirkung der Federelemente 8, 9 bei offener Reibungskupplung 1 ihre richtige Position einnehmen, so dass alle Kupplungsscheiben 5 gelüftet werden.

Bei der ersten Teilkupplung, der als Lamellenkupplung ausgeführten Doppelkupplung (in den Fig. 4, 5 und 6 ist das die links dargestellte Teilkupplung der als Doppelkupplung ausgeführten Reibungskupplung 1), sind die beiden (Außen-)Lamellen 7 (erste Lamelle 23, zweite Lamelle 24) über mehrere auf dem Umfang verteilte, als Federbügel ausgeführte Federelemente 8 mit der Anpressplatte 3 (dritte Lamelle 25) verbunden. Ist die Teilkupplung geöffnet (Fig. 4), halten die entspannten Federbügel die (Außen-)Lamellen 7, 23, 24 im richtigen Abstand zu der Anpressplatte 3, so dass alle Innenlamellen (hier als Kupplungsscheiben 5 bezeichnet) gelüftet sind. Wird die Reibungskupplung 1 geschlossen, bewegen sich anfangs die Anpressplatte 3 (dritte Lamelle 25) und die Außenlamellen 7, 23, 24 gemeinsam Richtung Gegenplatte 4, bis zuerst die der Gegenplatte 4 am nächsten gelegene Lamelle 7, nämlich die erste Lamelle 23, auf die direkt neben der Gegenplatte 4 angeordnete Innenlamelle (Kupplungsscheibe 5) trifft und diese gegen die Gegenplatte 4 drückt. Wird die Reibungs-kupplung 1 weiter geschlossen, bleibt die der Gegenplatte 4 am nächsten liegende Lamelle 7, die erste Lamelle 23, axial stehen oder bewegt sich nur noch minimal im Rahmen der axialen Elastizität der von ihr eingeklemmten Innenlamelle (Kupplungsscheibe 5) und die Federbügel, die diese (Außen-)Lamelle 7 (die erste Lamelle 23) mit der Anpressplatte 3 verbinden, beginnen sich elastisch zu verbiegen. Die andere (Außen-)Lamelle 7 (also die zweite Lamelle 24) bewegt sich weiter parallel mit der Anpressplatte 3 (dritte Lamelle 25) in Richtung der Gegenplatte 4, bis sie die nächste Innenlamelle (Kupplungsscheibe 5) gegen die sich bereits nicht mehr bewegende Außenlamelle 7, die erste Lamelle 23, geschoben hat (Fig. 5). Dann verformen sich auch deren Federbügel elastisch, bis die Anpressplatte 3 die direkt neben ihr angeordnete Innenlamellen (Kupplungsscheibe 5) einklemmt und die Reibungskupplung 1 geschlossen ist (Fig. 6). Wird die Reibungskupplung 1 geöffnet, verhindern die Axialkräfte der elastisch verformten Federbügel ein vorzeitiges Abheben der gegenplattennahen Reibkontakte 26. Dadurch hebt zuerst die Anpressplatte 3 von der ihr benachbarten Innenlamelle (Kupplungsscheibe 5) ab und dann folgt die der Anpressplatte 3 (der dritte Lamelle 25) nächstgelegene Außenlamelle 7, also die zweite Lamelle 24, bis wieder alle Reibkontakte 26 in der zuvor beschriebenen verbesserten Bewegungsreihenfolge gelüftet wurden.

Alternativ können die Federbügel (Federelemente 8) auch so ausgeführt werden, dass sie auch bei geöffneter Reibungskupplung 1 nicht ganz kraftfrei sind. Dann sind aber Anschlagelemente 13 zwischen den Federbügeln und der Anpressplatte 3 oder zwischen der Anpressplatte 3 und den Außenlamellen 7 erforderlich, damit die Außenlamellen 7 bei geöffneter Reibungskupplung 1 die richtige Position einnehmen und keine der Innenlamellen (Kupplungsscheiben 5) mehr eingeklemmt wird.

Bei der zweiten Teilkupplung der Doppelkupplung (in den Fig. 4, 5 und 6 ist das die rechts dargestellte Teilkupplung der als Doppelkupplung ausgeführten Reibungskupplung 1) sind an jeder Außenlamelle 7 mehrere auf dem Umfang verteilte Anschlagslaschen (Anschlagelemente 13) befestigt, die den maximalen Abstand zur benachbarten Außenlamelle 7 oder zur Anpressplatte 3 begrenzen. Zusätzlich sind an der Anpressplatte 3 Federelemente 8 (z.B. Blattfederlaschen) befestigt, die eine Kraftwirkung (Federwirkung) auf die mit den Außenlamellen 7 verbundenen Anschlagslaschen ausüben. Diese Kraftwirkung versucht die Außenlamellen 7 von der Anpressplatte 3 weg zu drücken. Bei geöffneter Reibungskupplung 1 nehmen alle Außenlamellen 7 somit den maximalen durch die Anschlagslaschen begrenzten Abstand zur Anpressplatte 3 bzw. zu den benachbarten Außenlamellen 7 ein. Wird die Reibungskupplung 1 geschlossen oder geöffnet, verhält sie sich wie die zuvor beschriebene erste Teilkupplung der Doppelkupplung. Statt der Federbügel verformen sich die Blattfederlaschen elastisch beim Schließen und Öffnen der Reibungskupplung 1.

Die Fig. 4, 5 und 6 zeigen eine Doppelkupplung bei der die Anpressplatten 3 von Blattfedern drehfest aber begrenzt axial verlagerbar mit den restlichen Kupplungskomponenten verbunden sind. Alternativ können die Anpressplatten 3 aber auch über eine in Umfangsrichtung 18 formschlüssige Kontur in die Lamellenträger (z. B. Außenlamellenträger 11) eingehängt werden.

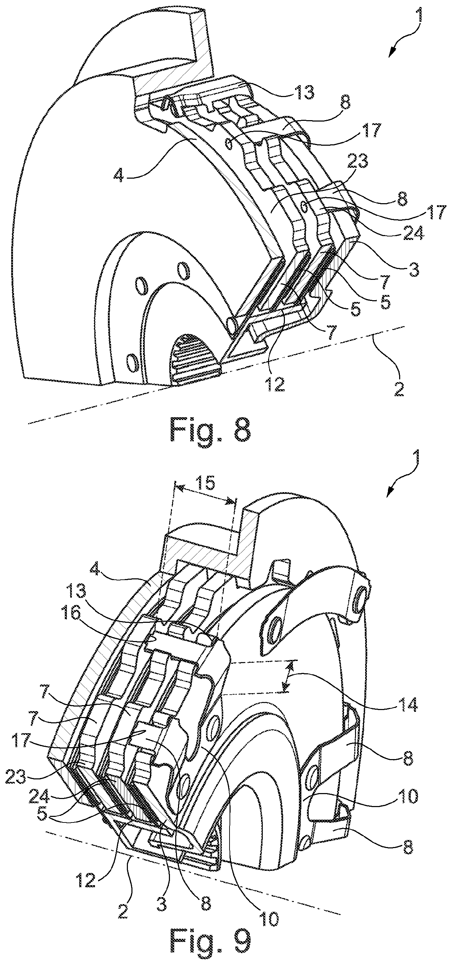

Fig. 7 zeigt eine Lamellenkupplung in einer perspektivischen Ansicht. Fig. 8 zeigt die Lamellenkupplung nach Fig. 7 in einer anderen perspektivischen Ansicht. Die Fig. 7 und 8 werden im Folgenden gemeinsam beschrieben.

Die Fig. 7 und 8 zeigen ein weiteres Ausführungsbeispiel für eine als Lamellenkupplung oder Lamellenbremse ausgeführte Reibungskupplung 1, bei der die optimierte axiale Bewegungsreihenfolge durch die Bauart sichergestellt wird. Die Anpressplatte 3 ist bei diesem Lamellenpaket sowohl durch Federelemente 8 mit den Außenlamellen 7 (erste Lamelle 23, die nahe der Gegenplatte 4 angeordnet ist; zweite Lamelle 24, die nahe der Anpressplatte 3 angeordnet ist) verbunden, die die Außenlamellen 7 und die Anpressplatte 3 auseinanderdrücken wollen, als auch über Anschlagelemente 13, die den maximalen Abstand zwischen den Außenlamellen 7 und der Anpressplatte 3 begrenzen. Die Federelemente 8 sind als Federbügel oder Federlaschen ausgeführt, die beispielsweise als Blechbiegeteile aus Federstahl hergestellt werden können. Jede Außenlamelle 7 ist über mehrere auf dem Umfang verteilte Federelemente 8 mit der Anpressplatte 3 verbunden. Bei diesem Ausführungsbeispiel sind mehrere Federbügel aus einem Bauteil ausgeformt, das an der Anpressplatte 3 befestigt (beispielsweise vernietet) ist. Indem mehrere Federbügel eine gemeinsame Befestigungsstelle (eine gemeinsame Befestigung 10) nutzen, wird die Montage erleichtert und es werden Befestigungselemente eingespart. Die Federelemente 8 sind so ausgeführt, dass von der Vernietungsstelle, mit der die Verbindung zur Anpressplatte 3 sichergestellt wird, sich radial nach außen zwei blattfederähnliche Biegebereiche 14 erstrecken, die radial außerhalb der Lamellen 7 (Innenlamellen) jeweils in einen sich axial erstreckenden Verbindungsanschnitt 15 übergehen. Diese Verbindungsabschnitte 15 sind unterschiedlich lang ausgeführt, so dass eine Federlasche mit der einen Außenlamelle 7 verbunden ist und die andere mit der anderen Außenlamelle 7 verbunden werden kann. Die Federkraft entsteht durch die elastische Verformung der Federelemente 8. Dabei bewegen (neigen) sich die blattfederähnlichen Biegebereiche 14 von der Rückseite der Anpressplatte 3 weg oder auf die Anpressplatte 3 zu. Die Verbindungsabschnitte 15 stützen sich zur Kraftübertragung axial an den Außenlamellen 7 ab und sind durch kleine Fortsätze 16, die in Bohrungen 17 der Außenlamellen 7 hineinragen, radial gesichert, damit die Verbindungsabschnitte 15 auch bei drehender Reibungskupplung 1 nicht durch die Fliehkraft von den Lamellen 7 abrutschen.

Bei diesem Ausführungsbeispiel sind mehrere auf dem Umfang verteilte Hakenelemente (Anschlagelement 13) an der Anpressplatte 3 festgenietet, die über die Außenlamellen 7 hinweg ragen und Fortsätze aufweisen, die sich axial hinter den Anschlagsflächen der Außenlamellen 7 befinden. Diese Fortsätze dienen als Anschläge, die den maximal möglichen Abstand zwischen der Anpressplatte 3 und der jeweiligen Außenlamelle 7 begrenzen. Bei geöffnetem Lamellenpaket werden die Außenlamellen 7 von den Federelementen 8 gegen die Anschläge gedrückt. Die Position der Außenlamellen 7 wird dadurch bei diesem Ausführungsbeispiel bei geöffnetem Lamellenpaket von der Geometrie der Anschläge bzw. des Hakenelementes bestimmt, wodurch die Lamellen 7 exakter und toleranzunempfindlicher in der richtigen Position gehalten werden können, als wenn die Position nur durch die kraftfreie Lage der Federelemente 8 definiert würde. Zwischen den Außenlamellen 7 ist bei geöffnetem Lamellenpaket, dadurch immer ein Abstand der größer ist als die Dicke der jeweiligen entlasteten Innenlamelle (Kupplungsscheibe 5). Dadurch wird kein Drehmoment mehr zwischen den Lamellen 7 und den Kupplungsscheiben 5 übertragen.

Ein positiver Nebeneffekt der vorgespannten Federelemente 8 besteht darin, dass die Lamellen 7 bei offenem Lamellenpaket so fest gegen die starren Anschläge gedrückt werden können, dass die an den axialen Kontaktstellen zwischen der Lamelle 7 und den Anschlägen entstehende Reibung ein ungewolltes Schwingen, ein ungewolltes Klappern oder ungewollte Mikrobewegungen zwischen den Lamellen 7 und ihren Nachbarbauteilen (z.B. den Lamellenträgern 11, 12) verhindern oder zumindest reduzieren kann.

Wenn die Federelemente 8, die zwischen der Anpressplatte 3 und der jeweiligen Außenlamelle 7 angeordnet sind (oder zwischen den Lamellen 7), nicht nur axiale Kräfte zwischen den beiden Bauteilen übertragen können, sondern auch tangentiale und/oder radiale Kräfte, können die beiden Bauteile auch durch die Federelemente 8 zueinander zentriert werden und/oder die Federelemente 8 können Drehmomente zwischen den beiden Bauteilen übertragen. Das Zentrieren oder die Drehmomentübertragung kann dann alleine von den Federelementen 8 übernommen werden, so dass keine Lamellenverzahnung oder Lamellenträger 11, 12 mehr erforderlich sind. Besonders sinnvoll ist es jedoch die Zentrierwirkung der Federelemente 8 und/oder die Drehmomentübertragung der Federelemente 8 mit der Lamellenverzahnung und den Lamellenträgern zu kombinieren. Eine besonders sinnvolle Kombination besteht darin, dass die Federelemente 8 so ausgelegt sind, dass sie die Axialpositionierung der Lamellen 7 übernehmen und im unteren Drehmomentbereich des Lamellenpaketes, das über die Reibflächen in die Lamellen 7 eingebrachte Drehmoment alleine übertragen. Bei höheren Drehmomenten legen sich dann die Zahnflanken der Lamelle 7 an die Zahnflanken der Lamellenträger 11, 12 an (bedingt durch die Elastizität der Federelemente 8 in Umfangsrichtung 18) und die Lamellenträger 11, 12 tragen zur Drehmomentübertragung bei.

Wenn kleine Momente nur durch die Federelemente 8 übertragen werden, können die axialen Elastizitäten der eingeklemmten Lamellen 7, die bereits bei relativ kleinen Kräften rausgedrückt werden und meistens bereits einen großen Teil des gesamten Federweges ausmachen, bereits überwunden werden, bevor sich die Flanken der Lamellen 7 und der Lamellenträger 11, 12 berühren und Reibung zwischen diesen Bauteilen entstehen kann. Dies verbessert die Regelbarkeit des Lamellenpaketes nochmals erheblich.

Alternativ können die Federelemente 8 auch die Lamellen 7 entgegen der Hauptdrehmomentübertragungsrichtung im Lamellenträger 11, 12 verdrehen. Wenn das Drehmoment ansteigt, das die Lamelle 7 beim Schließen des Lamellenpaketes übertragen muss, hebt die Lamelle 7 dann von den Zahnflanken, gegen die sie von den Federelementen 8 gedrückt wurde, ab und legt sich an den gegenüberliegenden Zahnflanken an, die die Drehmomentübertragung in der Hauptdrehmomentübertragungsrichtung sicherstellen. Durch den Flankenwechsel während dem Drehmomentaufbau können sich reibungsgedingte (axiale) Verspannungen in der Lamellenverzahnung lösen. Dies verbessert die Regelbarkeit des Lamellenpaketes ebenfalls erheblich.

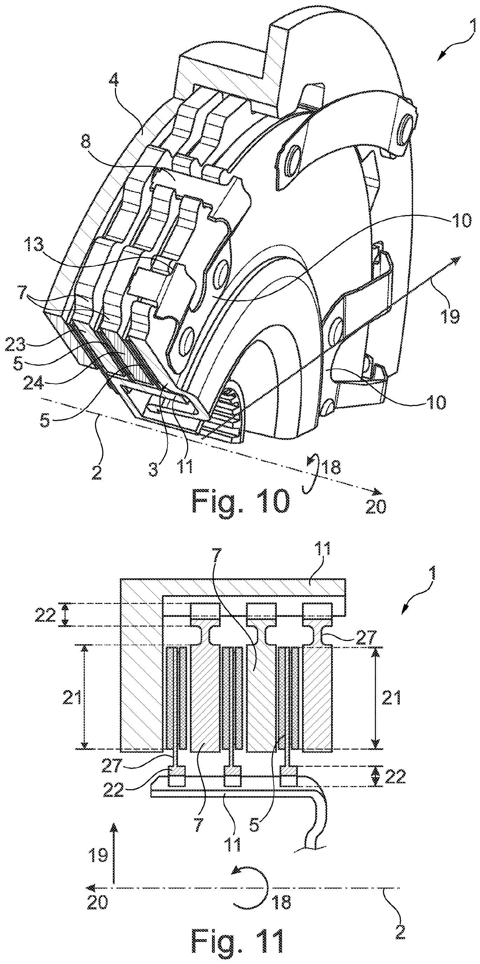

Fig. 9 zeigt eine andere Lamellenkupplung in geöffnetem Zustand in einer perspektivischen Ansicht. Fig. 10 zeigt die andere Lamellenkupplung nach Fig. 9 in geschlossenem Zustand in einer anderen perspektivischen Ansicht. Die Fig. 9 und 10 werden im Folgenden gemeinsam beschrieben.

Die Fig. 9 und 10 zeigen ein weiteres Ausführungsbeispiel einer Reibungskupplung 1. Bei der abgebildeten Lamellenkupplung oder Lamellenbremse sind die Anschläge in die Federelemente 8 integriert. Dazu sind die Verbindungsabschnitte 15, kurz bevor sie in die blattfederähnlichen Biegebereiche 14 übergehen, verbreitert und bilden so Fortsätze aus, mit den sich die Verbindungsabschnitte 15 bei geöffnetem Lamellenpaket an der Anpressplatte 3 abstützen können (Fig. 9). Wird das Lamellenpaket geschlossen, schieben die Federelemente 8 die Außenlamellen 7 (erste Lamelle 23, die nahe der Gegenplatte 4 angeordnet ist; zweite Lamelle 24, die nahe der Anpressplatte 3 angeordnet ist) wie zuvor beschrieben in der verbesserten Bewegungsreihenfolge gegen die Innenlamellen (Kupplungsscheiben 5) und beginnen anschließen sich elastisch zu verformen. Dabei heben die Anschlagskonturen (Anschlagelemente 13) der Federelemente 8 von der Anpressplatte 3 ab (Fig. 10). Da die Hauptverformung, die die Kraft- und Federwirkung der Federelemente 8 hervorruft, in den blattfederähnlichen Biegebereichen 14 erfolgt, ändert sich der Abstand zwischen den die Anschläge ausbildenden Fortsätze der Verbindungsabschnitte 15 und den Kontaktflächen mit denen sich die Verbindungsabschnitte 15 an den Außenlamellen 7 abstützen nicht oder nur minimal. Die Länge der Verbindungsabschnitte 15 kann somit genutzt werden, um den maximalen Abstand zwischen der jeweiligen Außenlamelle 7 und der Anpressplatte 3 zu begrenzen. Die Federelemente 8, die mit weit von der Anpressplatte 3 entfernt angeordneten Außenlamellen 7 (hier z. B. die erste Lamelle 23) verbunden sind, verformen sich beim Öffnen oder Schließen des Lamellenpakete stärker, als die Federelemente 8, die mit Lamellen 7 (hier z. B. die zweite Lamelle 24) verbunden sind, die nahe der Anpressplatte 3 angeordnet sind (erkennbar durch den Abstand der Anschlagskonturen bei dem in Fig. 10 abgebildeten geschlossenen Lamellenpaket), da die Relativbewegung zwischen den beiden Platten 3, 4 (bzw. zwischen der jeweiligen Außenlamelle 7 und der Gegenplatte 4) von der Anzahl der dazwischenliegenden zu öffnenden oder zu schließenden Reibkontakte 26 abhängt.

Bei dem gezeigten Ausführungsbeispiel, bei dem die Federelemente 8 als aus Federstahl hergestellte Blechbiegeteile ausgeführt sind, kann der Abstand zwischen den die Anschläge ausbildenden Fortsätzen der Verbindungsabschnitte 15 und den Kontaktflächen mit denen sich die Verbindungsabschnitte 15 an den Außenlamellen 7 abstützen bereits durch die Platinenform der nicht aufgestellten Feder festgelegt werden. Dadurch wirken sich nur die Toleranzen, die beim Ausschneiden (z.B. ausstanzen, laserschneiden, wasserstehlschneiden oder fräsen) des Federkörpers aus dem Stahlblech entstehen und die Formtoleranzen der Lamelle 7 und der Anpressplatte 3 auf die Genauigkeit der Anschläge aus. Die Biegebereiche der Federelemente 8, bei denen mit größeren Fertigungsabweichungen (Toleranzen) zu rechnen ist, haben keinen Einfluss auf die Genauigkeit der Anschläge.

In den hier gezeigten Ausführungsbeispielen sind immer die Gegenplatte 4, die Außenlamellen 7, 23, 24 und die Anpressplatte 3 (dritte Anpressplatte 25) drehfest miteinander verbunden und sind gemeinsam dem Antrieb oder dem Abtrieb der Reibungs-kupplung 1 oder der Bremse zugeordnet. Die Innenlamellen (Kupplungsscheiben 5) sind ebenfalls drehfest miteinander verbunden und dem anderen Drehsystem (Antrieb oder Abtrieb) zugeordnet als die Anpressplatte 3 und die mit ihr verbunden Teile. Da die Anpressplatte 3 drehfest mit den Außenlamellen 7 verbunden ist, sind bei den hier gezeigten Ausführungsbeispielen auch die Federelemente 8 zwischen den Anpressplatten 3 und den Außenlamellen 7 angeordnet. Reibungskupplungen 1 oder Bremsen können aber auch so aufgebaut werden, dass die Anpressplatte 3 und die Innenlamellen (Kupplungsscheiben 5) zum gleichen Drehsystem gehören. In diesem Fall werden die Federelemente 7 dann zwischen der Anpressplatte 3 und den Innenlamellen (Kupplungsscheibe 5); bzw. zwischen den Innenlamellen bzw. den Kupplungsscheiben 5 angeordnet. Die Verbindungsabschnitte 15 der Federelemente 7 und die Hakenelemente die die Anschläge der Anschlagelemente 13 bilden, werden dann sinnvoller Weise radial innerhalb der Reibflächen angeordnet.

Die zuvor beschriebenen Ausführungsformen und Funktionsweisen lassen sich alle sinngemäß auch auf Lamellenpakete übertragen, bei denen die Anpressplatte 3 und die Innenlamellen bzw. Kupplungsscheiben 5 zum gleichen Drehsystem gehören.

Die Fig. zeigen hauptsächlich Reibpakete mit zwei (Außen-)Lamellen 7, 23, 24, die mit Federelementen 8 in Wirkverbindung stehen und durch diese Federelemente 8 in axialer Richtung 20 verschoben werden können. Die Erfindung ist jedoch auf Reibpakete mit beliebig vielen Lamellen 7 übertragbar. Sinnvollerweise werden alle Lamellen 7, die zum selben Drehsystem gehören wie die Anpressplatte 3, durch Federelemente 8 mit der Anpressplatte 3 gekoppelt. Somit werden umso mehr Federelemente 8 (bzw. federnde Abschnitte, falls mehrere Lamellen 7 durch gemeinsame Federelemente 8 bewegt werden) benötigt, umso mehr Lamellen 7 ein Lamellenpaket aufweist.

Statt jede Lamelle 7, die zum selben Drehsystem gehört wie die Anpressplatte 3, direkt durch mindestens ein Federelement 8 mit der Anpressplatte 3 zu verbinden, können die Lamellen 7 auch immer durch Federelemente 8 mit der nächstgelegenen, zum gleichen Drehsystem gehörenden Lamelle 7 verbunden werden, bis zu der Lamelle 7, die durch mindestens ein Federelemente 8 mit der Anpressplatte 3 verbunden wird.

Wenn die Federkraft zwischen der Anpressplatte 3 und der ihr nächstgelegenen, zum gleichen Drehsystem gehörenden Lamelle 7 am größten ist, und dann die Federkraft zwischen den Lamellen 7 immer weiter abnimmt, je weiter die Lamellen 7 von der Anpressplatte 3 entfernt sind, sorgen die Federelemente 8 auch so für die verbesserte axiale Bewegungsreihenfolge.

Fig. 11 zeigt ein Detail einer Lamellenkupplung in einer Seitenansicht im Schnitt. Die hier beschriebene Erfindung wird sinnvollerweise mit Lamellen 7 kombiniert, die eine deutliche axiale Weichheit (27) zwischen dem Ringkörper 21, der die Reibflächen ausbildet, und dem Konturelement 22 (z. B. Verzahnung), das die drehfeste Anbindung und die axiale Verschiebbarkeit mit den Antriebs- oder Abtriebsbauteilen sicherstellt, aufweisen. Dies ist in der Fig. 11 symbolisch angedeutet, durch die axial schmalen Lamellenformen in der radialen Richtung 19 außerhalb der Reibflächen bzw. des Ringkörpers 21 an den Außenlamellen 7 und in der radialen Richtung 19 innerhalb der Reibflächen an den Innenlamellen 7 (bzw. den Kupplungsscheiben 5). Durch die axiale Weichheit 27 kann der Ringkörper 21 der jeweiligen (Außen- und Innen-)Lamelle 7 axial relativ zu der Verzahnung elastisch verschoben werden. Dadurch kann die Lamelle 7, die von den Federelementen 8 gegen die nächste Lamelle 7 geschoben wurde, die minimale axiale Bewegung, die aus der Elastizität der dahinterliegenden Lamellen 7 resultiert, ausführen, ohne die dann schon momentübertragende Verzahnung axial verschieben zu müssen.

Bei allen Ausführungsbeispielen wird der Reibungskupplung 1 die hier vorgeschlagene Bewegungsreihenfolge durch die von Federelementen 8, 9 hervorgerufene Kraftwirkung aufgezwungen. Statt durch Federelemente 8, 9 kann die Kraftwirkung, die die Lamellen 7, 23, 24, 25, Zwischenplatten 6 und Kupplungsscheiben 5 in der gewünschten Reihenfolge bewegt, auch durch Magnete oder Fliehkraftgewichte hervorgerufen werden.

Die Richtungsangaben axial, radial, tangential und Umfangsrichtung beziehen sich auf die Rotationsachse bzw. Drehachse 2, um die sich die Reibungskupplung 1 und/oder die Bremse drehen. Somit ist die axiale Richtung 20 (parallel zur Drehachse 2 und) orthogonal zur Reibfläche der Anpressplatte 3 orientiert.

### Bezugszeichenliste

- 1: Reibungskupplung
- 2: Drehachse
- 3: Anpressplatte (dritte Lamelle 25)
- 4: Gegenplatte
- 5: Kupplungsscheibe
- 6: Zwischenplatte
- 7: (Außen-)Lamelle (erste Lamelle 23, zweite Lamelle 24)
- 8: (erstes) Federelement
- 9: zweites Federelement
- 10: Befestigung
- 11: Außenlamellenträger
- 12: Innenlamellenträger
- 13: Anschlagelement
- 14: Biegebereich
- 15: Verbindungsabschnitt
- 16: Fortsatz
- 17: Bohrung
- 18: Umfangsrichtung
- 19: radiale Richtung
- 20: axiale Richtung
- 21: Ringkörper
- 22: Konturelement
- 23: erste Lamelle
- 24: zweite Lamelle
- 25: dritte Lamelle
- 26: Reibkontakt
- 27: Weichheit

## Patentansprüche

1. Reibungskupplung (1), zumindest aufweisend eine Gegenplatte (4), eine gegenüber der Gegenplatte (4) entlang einer gemeinsamen Drehachse (2) verlagerbare Anpressplatte (3) sowie eine Mehrzahl von zwischen der Gegenplatte (4) und der Anpressplatte (3) angeordnete Kupplungsscheiben (5), wobei die Reibungs-kupplung (1) eine Mehrscheibenkupplung mit zusätzlich mindestens einer, zwischen der Gegenplatte (4) und der Anpressplatte (3) angeordneten Zwischenplatte (6) oder eine Lamellenkupplung mit zusätzlich mindestens einer, zwischen der Gegenplatte (4) und der Anpressplatte (3) angeordneten Lamelle (7) ist; wobei
i. zwischen der Anpressplatte (3) und der Zwischenplatte (6) sowie zwischen der Gegenplatte (4) und der Zwischenplatte (6) jeweils eine Kupplungsscheibe (5) angeordnet ist; oder
ii. zwischen der Anpressplatte (3) und der Gegenplatte (4) angeordnete Kupplungsscheiben (5) durch jeweils eine Lamelle (7) voneinander beabstandet angeordnet sind;
wobei die Reibungskupplung (1) derart ausgeführt ist, dass zumindest bei einem Öffnen der Reibungskupplung (1) und dabei ausgehend von der Anpressplatte (3) und hin zur Gegenplatte (4) jede der Kupplungsscheiben (5) jeweils nacheinander von der jeweilig benachbart angeordneten Komponente (3, 4, 6, 7) wegbewegbar ist oder zumindest bei einem Schließen der Reibungskupplung (1) und dabei ausgehend von der Gegenplatte (4) und hin zur Anpressplatte (3) jede der Kupplungsscheiben (5) jeweils nacheinander zu der jeweilig benachbart angeordneten Komponente (3, 4, 6, 7) hinbewegbar ist, **dadurch gekennzeichnet, dass**,
a) die Anpressplatte (3) mit der Zwischenplatte (6) über mindestens ein erstes Federelement (8) und die Zwischenplatte (6) mit der Gegenplatte (4) über mindestens ein zweites Federelement (9) verbunden ist; wobei durch eine Federkraft des jeweiligen Federelements (8, 9) bei geöffneter Reibungs-kupplung (1) die Anpressplatte (3) von der Zwischenplatte (6) und die Zwischenplatte (6) von der Gegenplatte (4) beabstandet angeordnet ist; oder
b) die Anpressplatte (3) mit der mindestens einen Lamelle (7) über mindestens ein erstes Federelement (8) verbunden ist, wobei durch die Federkraft des ersten Federelements (8) die mindestens eine Lamelle (7) bei geöffneter Reibungskupplung (1) von der Anpressplatte (3) beabstandet angeordnet ist..

2. Reibungskupplung (1) nach Anspruch 1, wobei infolge des Verlagerns der Anpressplatte (3) jeweils ein Reibkontakt (26) zwischen der jeweiligen Kupplungsscheibe (5) und der benachbart zu dieser Kupplungsscheibe (5) angeordneten Komponente (3, 4, 6, 7) beim Schließen der Reibungskupplung (1) herstellbar und beim Öffnen der Reibungskupplung (1) lösbar ist, wobei diese Reibkontakte (26) in einer festgelegten zeitlichen Reihenfolge nacheinander erzeugbar oder lösbar sind.

3. Reibungskupplung (1) nach Anspruch 1, wobei die Federkräfte der Federelemente (8, 9) voneinander unterschiedlich ausgeführt sind.

4. Reibungskupplung (1) nach Anspruch 3, wobei die Federkraft des ersten Federelements (8) größer ist als die Federkraft des zweiten Federelements (9).

5. Reibungskupplung (1) nach einem der vorhergehenden Ansprüche 1 bis 4, wobei zumindest ein Anschlagelement (13) vorgesehen ist, durch das ein maximaler Abstand zumindest zwischen Anpressplatte (3) und Gegenplatte (4) oder zwischen Anpressplatte (3) und Zwischenplatte (6) oder zwischen Anpressplatte (3) und der mindestens einen mit der Anpressplatte (3) über das Federelement (8, 9) verbundenen Lamellen (7) definiert ist.

6. Reibungskupplung (1) nach einem der vorhergehenden Ansprüche 1 bis 5, wobei zumindest ein Anschlagelement (13) einteilig mit dem mindestens einen Federelement (8, 9) ausgeführt ist.

7. Reibungskupplung (1) nach einem der vorhergehenden Ansprüche 1 bis 6, wobei mehrere mit unterschiedlichen Platten (3, 4, 6) oder Lamellen (7) verbundene Federelemente (8, 9) über eine gemeinsame Befestigung (10) mit der Anpressplatte (3) verbunden sind.

8. Reibungskupplung (1) nach einem der vorhergehenden Ansprüche 1 bis 5, wobei zumindest ein Federelement (8, 9) bei geöffneter Reibungskupplung (1) kraftfrei ist.

9. Reibungskupplung (1) nach einem der vorhergehenden Ansprüche, wobei die Reibungskupplung (1) eine Lamellenkupplung oder eine Mehrscheibenkupplung ist, wobei zumindest eine der Lamellen (7) oder die Zwischenplatte (6) oder die Anpressplatte (3) oder eine Kupplungsscheibe eine axiale Weichheit (27) aufweist, die zwischen einem Ringkörper (21), der einen Reibkontakt (26) mit einer benachbarten Komponente (3, 4, 5) ausbildet, und einem Konturelement 22, das mit einem Außenlamellenträger (11) oder einem Innenlamellenträger (12) oder einer Welle drehmomentübertragend verbunden ist, angeordnet ist.

## Claims

1. A friction clutch (1), at least having a counterplate (4), a pressure plate (3) that can be moved along a common rotational axis (2) with respect to the counterplate (4) and a plurality of clutch discs (5) arranged between the counterplate (4) and the pressure plate (3), wherein the friction clutch (1) is a multiple disc clutch additionally having at least one intermediate plate (6) arranged between the counterplate (4) and the pressure plate (3) or is a multi-plate clutch additionally having at least one multiple plate (7) arranged between the counterplate (4) and the pressure plate (3); wherein
i. a clutch disc (5) is arranged in each case between the pressure plate (3) and the intermediate plate (6) and between the counterplate (4) and the intermediate plate (6); or
ii. clutch discs (5) arranged between the pressure plate (3) and the counterplate (4) are arranged spaced apart from each other in each case by means of a multiple plate (7);
wherein the friction clutch (1) is designed in such a way that, at least when the friction clutch (1) is disengaged, starting from the pressure plate (3) and towards the counterplate (4), each of the clutch discs (5) can be moved away from the adjacent component (3, 4, 6, 7) one after the other, or at least when the friction clutch (1) is engaged, starting from the counterplate (4) and towards the pressure plate (3), each of the clutch discs (5) can be moved towards the adjacent component (3, 4, 6, 7) in each case one after the other, **characterised in that**
a) the pressure plate (3) is connected to the intermediate plate (6) via at least one first spring element (8) and the intermediate plate (6) is connected to the counterplate (4) via at least one second spring element (9); wherein the pressure plate (3) is arranged spaced apart from the intermediate plate (6) and the intermediate plate (6) is arranged spaced apart from the counterplate (4) by a spring force of the spring element (8, 9) when the friction clutch (1) is disengaged; or
b) the pressure plate (3) is connected to the at least one multiple plate (7) via at least one first spring element (8), wherein the spring force of the first spring element (8) causes the at least one multiple plate (7) to be arranged spaced apart from the pressure plate (3) when the friction clutch (1) is disengaged.

2. The friction clutch (1) according to claim 1, wherein, as a result of the movement of the pressure plate (3), a frictional contact (26) between the clutch disc (5) and the component (3, 4, 6, 7) arranged adjacent to said clutch disc (5) can be produced when the friction clutch (1) is engaged and can be released when the friction clutch (1) is disengaged, wherein said frictional contacts (26) can be produced or released successively in a fixed time sequence.

3. The friction clutch (1) according to claim 1, wherein the spring forces of the spring elements (8, 9) are designed to be different from one another.

4. The friction clutch (1) according to claim 3, wherein the spring force of the first spring element (8) is greater than the spring force of the second spring element (9).

5. The friction clutch (1) according to any one of the preceding claims 1 to 4, wherein at least one stop element (13) is provided, by means of which a maximum distance is defined at least between the pressure plate (3) and the counterplate (4) or between the pressure plate (3) and the intermediate plate (6) or between the pressure plate (3) and the at least one multiple plate (7) connected to the pressure plate (3) via the spring element (8, 9).

6. The friction clutch (1) according to any one of the preceding claims 1 to 5, wherein at least one stop element (13) is designed in one piece with the at least one spring element (8, 9).

7. The friction clutch (1) according to any one of the preceding claims 1 to 6, wherein a plurality of spring elements (8, 9) connected to different plates (3, 4, 6) or multiple plates (7) are connected to the pressure plate (3) via a common fastening (10).

8. The friction clutch (1) according to any one of the preceding claims 1 to 5, wherein at least one spring element (8, 9) is free of force when the friction clutch (1) is disengaged.

9. The friction clutch (1) according to any one of the preceding claims, wherein the friction clutch (1) is a multi-plate clutch or a multiple disc clutch, wherein at least one of the multiple plates (7) or the intermediate plate (6) or the pressure plate (3) or a clutch disc has an axial softness (27) which is arranged between an annular body (21) that forms a frictional contact (26) with an adjacent component (3, 4, 5) and a contour element 22 that is connected to an outer plate carrier (11) or an inner plate carrier (12) or a shaft in a torque-transmitting manner.

## Revendications

1. Embrayage à friction (1), comportant au moins un contre-plateau (4), un plateau de pression (3) déplaçable par rapport au contre-plateau (4) selon un axe de rotation commun (2) et une pluralité de disques d'embrayage (5) agencés entre le contre-plateau (4) et le plateau de pression (3), dans lequel l'embrayage à friction (1) est un embrayage multidisque doté en outre d'au moins un plateau intermédiaire (6) agencé entre le contre-plateau (4) et le plateau de pression (3) ou un embrayage à lamelles doté en outre d'au moins une lamelle (7) agencée entre le contre-plateau (4) et le plateau de pression (3) ; dans lequel
i. entre le plateau de pression (3) et le plateau intermédiaire (6) et entre le contre-plateau (4) et le plateau intermédiaire (6) est agencé respectivement un disque d'embrayage (5) ; ou
ii. les disques d'embrayage (5) agencés entre le plateau de pression (3) et le contre-plateau (4) sont agencés à une certaine distance les uns des autres au moyen d'une lamelle (7) respective ;
dans lequel l'embrayage à friction (1) est conçu de telle sorte que, au moins lorsque l'embrayage à friction (1) est ouvert et, ce faisant, en partant du plateau de pression (3) et vers le contre-plateau (4), chacun des disques d'embrayage (5) peut s'écarter l'un après l'autre de l'élément respectivement adjacent (3, 4, 6, 7) ou au moins lorsque l'embrayage à friction (1) est fermé et, ce faisant, en partant du contre-plateau (4) et vers le plateau de pression (3), chacun des disques d'embrayage (5) peut se rapprocher l'un après l'autre de l'élément respectivement adjacent (3, 4, 6, 7), **caractérisé en ce que**,
a) le plateau de pression (3) est relié au plateau intermédiaire (6) par au moins un premier élément ressort (8) et le plateau intermédiaire (6) est relié au contre-plateau (4) par au moins un second élément ressort (9) ; dans lequel le plateau de pression (3) est agencé à une certaine distance du plateau intermédiaire (6) et le plateau intermédiaire (6) est agencé à une certaine distance du contre-plateau (4) au moyen d'une force élastique de l'élément ressort (8, 9) respectif lorsque l'embrayage à friction (1) est ouvert ; ou
b) le plateau de pression (3) est relié à l'au moins une lamelle (7) par au moins un premier élément ressort (8), dans lequel l'au moins une lamelle (7) est agencée à une certaine distance du plateau de pression (3) par la force élastique du premier élément ressort (8) lorsque l'embrayage à friction (1) est ouvert.

2. Embrayage à friction (1) selon la revendication 1, dans lequel, en raison du déplacement du plateau de pression (3), peut être généré à chaque fois un contact par friction (26) entre le disque d'embrayage respectif (5) et le composant (3, 4, 6, 7) agencé à côté de ce disque d'embrayage (5) lorsque l'embrayage à friction (1) est fermé et peut être libéré lorsque l'embrayage à friction (1) est ouvert, dans lequel ces contacts par friction (26) peuvent être générés ou libérés l'un après l'autre dans une séquence de temps fixe.

3. Embrayage à friction (1) selon la revendication 1, dans lequel les forces élastiques des éléments ressorts (8, 9) sont conçues différentes l'une de l'autre.

4. Embrayage à friction (1) selon la revendication 3, dans lequel la force élastique du premier élément ressort (8) est supérieure à la force élastique du second élément ressort (9).

5. Embrayage à friction (1) selon l'une quelconque des revendications précédentes 1 à 4, dans lequel il est prévu au moins un élément de butée (13) qui permet de définir une distance maximale au moins entre le plateau de pression (3) et le contre-plateau (4) ou entre le plateau de pression (3) et le plateau intermédiaire (6) ou entre le plateau de pression (3) et l'au moins une lamelle (7) reliée au plateau de pression (3) par l'élément ressort (8, 9).

6. Embrayage à friction (1) selon l'une quelconque des revendications précédentes 1 à 5, dans lequel au moins un élément de butée (13) est réalisé d'une seule pièce avec le au moins un élément ressort (8, 9).

7. Embrayage à friction (1) selon l'une quelconque des revendications précédentes 1 à 6, dans lequel plusieurs éléments ressorts (8, 9) reliés à différentes plateaux (3, 4, 6) ou différentes lamelles (7) sont reliés au plateau de pression (3) par une fixation commune (10).

8. Embrayage à friction (1) selon l'une quelconque des revendications précédentes 1 à 5, dans lequel au moins un élément ressort (8, 9) est sans force lorsque l'embrayage à friction (1) est ouvert.

9. Embrayage à friction (1) selon l'une quelconque des revendications précédentes, dans lequel l'embrayage à friction (1) est un embrayage à lamelles ou un embrayage multidisque, dans lequel au moins l'une des lamelles (7) ou le plateau intermédiaire (6) ou le plateau de pression (3) ou un disque d'embrayage présente une souplesse axiale (27) qui est agencée entre un corps annulaire (21), qui forme un contact par friction (26) avec un composant adjacent (3, 4, 5) et un élément de contour 22, qui est relié à un porte-lamelle extérieur (11) ou à un porte-lamelle intérieur (12) ou à un arbre pour transmettre un couple.
